# EUROPÄISCHE PATENTANMELDUNG

(11) **EP 2 078 857 A1**
(43) Veröffentlichungstag der Anmeldung: **15.07.2009**
(21) Anmeldenummer: 08386019.7
(22) Anmeldetag: 13.08.2008
(51) Int. Cl.: F03G 7/00, F03G 7/08

(54) **Mechanismus für die Produktion elektrischer Energie von der Bewegung der Fahrzeuge im Strassennetz**

(30) Priorität: 14.08.2007 GR 20070100533
(71) Anmelder: Apostolidis, Apostolos, 43100 Karditsa (GR)
(72) Erfinder: Apostolidis, Apostolos, 43100 Karditsa (GR)

(57) **Zusammenfassung**

Mechanismus fuer die Produktion elektrischer Energie von der Bewegung der Fahrzeuge im Strassennetz.

Der Mechanismus fue die Produktion elektrischer Energie von der Bewegung der Fahrzeuge im Strassennetz ist charakterisierend dafuer, dass er keine Treibstoff braucht um elektrische Energie zu produzieren.Ich gliedere ihn in den erneuernden Quellen fuer elektrische Produktion ein und um zu funktionieren braucht er die folgenden Zuberhoerteile,die auf einem metallischen Rahmen angebraucht sind,der sie hunter dem Strassenpflaster befindet,ausser den Pedalen,die aus der Strasse hervorragen.Der Vorteil der Erfindung ist,dass die Strassen heute wie Floesse sind.Ihre Funktion wird nicht durch die Wetterbedingungen beeinflusst,auch nicht ob Tag oder Nacht ist.Die Zuberhoerteile sind folgende:
1) Pedal
2) Pleuelstange
3) Rotationsgetriebe
4) Zylinder der kurbelwelle/der Erhaltung der Drehtkraft
5) Dynamo
6) Grundstuetze fuer Zentralachse
7) Grundstuetze fuer Zentralachse
8) Zentralachse
9) elastische Beschichtung
10) Balken der Pedalstuetzung
11) Grundstuetze der Kompressionsfeder und Funktion der Schwankungsmechanik
12) Feder
13) Schwankungsmechanik fuer die Hoehe des Pedals

## Beschreibung

Diese Erfindung bezieht sich auf einen Mechanismus, der elektrischen Storm erzeugt ohne Treibstoft.

Um zu funktionieren benutzt er die Treibkraft des Verkehrs heute die Strassennetze haben.Der Mechanismus ist eine Gesamtheit,deren groessten Teil sich unter dem Stassenpflaster befindet.Nur die Pedale ragen aus der Strasse heraus und es sind diese,die den Mechanismus in Bewegung setzen, wenn ein Fahrzeug darueber faehrt und folglich die Pedale mit Wucht herunterdrueckt ,wie zu verstehen ist.Im Anschluss daran verbindet eine Pleuelstange das Pedal mit einem Getriebe, das die Zentraldrehachse einschliesst und diese anfaengt zu drehen, so dass das Dynamoin Bewegung gesetzt wird und anfaengt elektrischen Strom zu erzeugen, der ins oeffentliche Netz abgeleitet wird. Auf der Zentralachse gibt es einen schweren Zylinder fuer die Erhaltung der Drehkraft um eine gleichartige Bewegung des Mechanismus zu erhalten. Nach dem Herunterdruecken des Pedals kehrt dieses wieder durch eine Feder, die die Pleuelstange umhuellt, in Bereitschaftszustand zurueck. Das Getriebe gibt Bewegung in eine Richtung, wie bei den Hinterraedern des Fahrrads. Der Mechanismus deckt das ganze Strassenpflaster der gleichen Fahrrichtung,die Pedale hingegen, die nur auf der gegenfahrbahn herausrangen, wenn wir ihnen naeherkommen, haben 30cm Groesse in der Strassenbreite und 40cm in der Strassenlaenge. Zwischen ihnen gibt es 1mm Abstand, um sich frei bewegen zu koennen. Die Pedale sind in gleicher Zahl wie die Getriebe, die die Zentrallachse einschliessen zu koennen, die Vor- und Nachteile betrifft, da wir aber zahlreiche solche Machanismen anbringen koennen und angesichts derTatsache, dass der Mechanismus diese sichere Energiequelle ausnutzt, kann ich sagen, dass die anderen Stromerzeugennden Mechanismen, Erdoel verbrauchen, verdraengt werden. Folglich werdenwir einen besonders groessen wirtschaftlichen und oekologischen Vorteil haben.

Der Vorteil Erfindung ist die Produktion elektrischer Energie ohne Treibstoff, da der Mechanismus keinen Treibstoff gebraucht, um zu funktionierem.

Der Mechanismus ist auf einem metallischen Rahmen in Form von einem Parallelflachen Rechteck angebracht und deckt das ganze Strassenpflaster der gleichen Fahrrichtung. Seine Eigenschaft ist, dass er keinen Treibstoff gebraucht um zu funktionieren. Trotzdem funktioniet der Mechanismus absolut zuverlaessig und wirksam jede Zeit, wenn die Strasse Vekehr hat. Das Schema 1) zeigt eine Seite des Mechanismus, wo die Pedale 1) gezeigt werden, die der einzige Teil sind die aus der Strasse hervorragen,waehrend unter dem Strassenpflaster die Pleuelstangen 2), das Rotationsgetriebe 3), der Zylinder der Kurbelwelle 4) und das Dynamo 5) gezeigt warden. Auch kann man die zwei Grundstuetzen 6) und 7) sehen, die die drehbare Zentralachse 8) auf dem metallischen Rahmen stuetzen, so dass sie sich frei bewegen kann. Auf dem Schema 2) kann man die Pedale 1) erkennen, waehrend sie von einem Fahrzeug heruntergedrueckt werden und auch vor dem Herunterdruecken. Die Durchfahrt der Fahrzeuge ist absolut sicher und die Vermeidung des Laerms ist durch die elastische Beschichtung gesichert 9), die es an dem Beruehrungspunkt mit der Grundstuetze gibt. Schema 2) und 3).

Das Schema 3) zeigt den Mechanismus mit allen Zubehoerteilen, die mehr sind, als wir oben beschrieben haben, den Balken, der alle Pedale in der Hoehe des Strassenpflaster zusammenhaelt 10), die Grundstuetze (11) , die nutzbar ist um die Kompressionsfeder in Funktion zu bringen , die nach dem Heruntertruecken des Pedals von einem Farhzeug dieses wieder in Bereitsschaftszustand bringt und die Schwankungsmechanik fur die Hoehe des Pedals (13) , die sich auch frei bewegt in dem Abstand , den wir auswaehlen , z.B. wenn es sich um schnellbefahrene Strassen handelt, koennen wir das Pedal so einstellen , so dass es 5cm aus der Strasse hervorragt , waerhend fuer Strassen ,die mit kleinerer Geschwindigkeit befahren werden ,geben wir dem Pedal eine groessere Hoehe.

Die Zuberhoerteile des Mechanismus sind die folgenden , wie auf Schema(3) zu sehen ist.
1)Pedal
2)Pleuelstange
3)Rotationsgetriebe
4)Zylinder der Kurbelwelle/derErhaltung des Drehkraft
5)Dynamo
6)Grundstuetze fuer Zentralachse
7)Grundstuetze fuer Zentralachse
8)Zentralachse
9)elastische Beschictung
10)Balken der Pedalstutzung
11)Grundstuetze fuer Kopressionsfeder und Fuktion der Schwankungsmechanik
12)Feder
13)Schwankungsmechanik fuer die Hoehe des Pedals

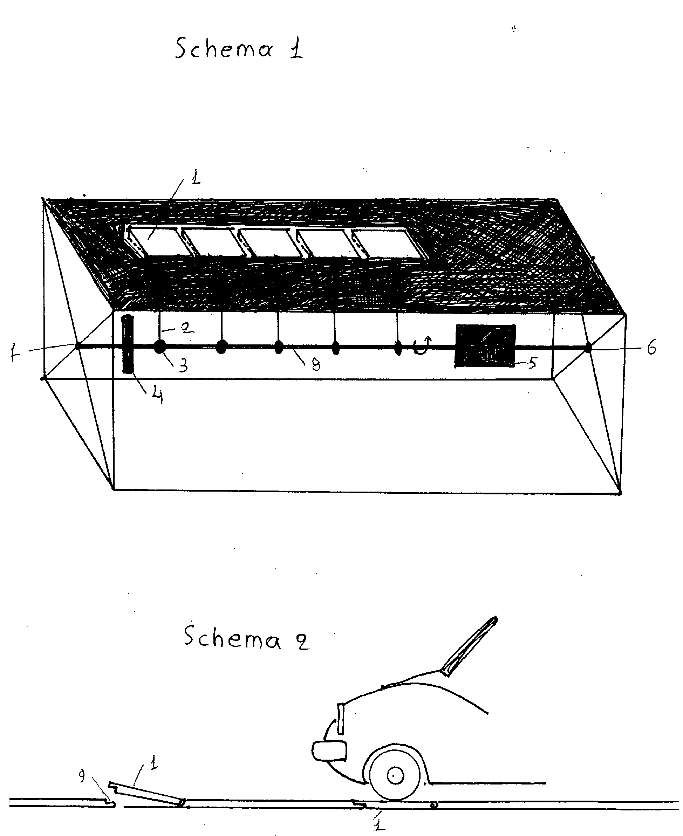

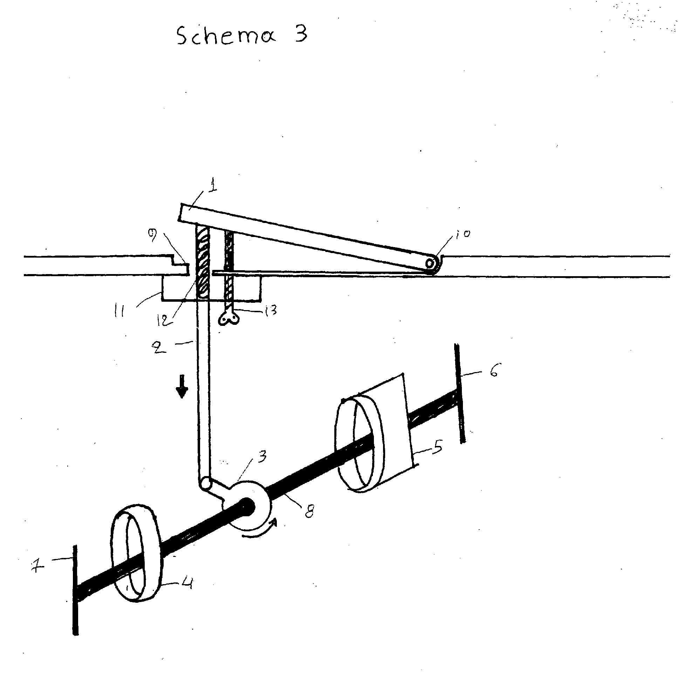

## Patentansprüche

1. Der Mechanismus fuer die Produktions elektrischer Energie von der Bewegung der Fahrzeuge in Strassennetz ist eine Gesamtheit von Zubehoerteilen, die auf einem metallischen Rahmen in Form von einem parallelflachen Rechteck angebracht sind, wie das Schema 1)zeigt. Das Schema 1) zeigt eine Seite, wo man die aus der Strasse hervorragen, man kann auch die Plenelstangen 2), das Rotationsgetriebe 3), den Zylinder der Kurbelwelle 4), das Dynama 5), die Grundstoetzen der Drehachsen 6) und 7) die Zentraldrehachse 8) sehen. Das Schema 2) zeigt das Pedal 1) zusammengedrueckt oder nicht vom Fahrzeug und elastische Beschichtung 9). Das Schema 3) zeigt den Mechanismus der Pedalem mit allen Zubehoerteilen. Auf diese Weise funktionieren alle Pedale.
1) Pedal
2) Pleuelstrange
3) Rotationsgetriebe
4) Zylinder der Kurbelwelle/der Erhaltungs der Drehkraft
5) Dynamo
6) Grundstuetze fuer Zentralachse
7) Grundstuetze fuer Zentralachse
8) Zentralachse
9) elastische Beschichtung
10) Balken der Pedalstuetzung
11) Grundstuetze fuer Kompressionsfeder und Funktion der Schwankungsmachanik
12) Feder
13) Schwankungsmechanik fuer die Hoehe des Pedals
